**Europäisches Patentamt**

**European Patent Office**

**Office européen des brevets**

(19)

(11) Veröffentlichungsnummer: **0 239 788**
**B1**

(12) **EUROPÄISCHE PATENTSCHRIFT**

(45) Veröffentlichungstag der Patentschrift:
**24.10.90**

(21) Anmeldenummer: **87102692.8**

(22) Anmeldetag: **22.03.86**

(60) Veröffentlichungsnummer der früheren Anmeldung
nach Art. 76 EPÜ: **0197401**

(51) Int. Cl.⁵: **F16K 24/04**, F16K 31/20,
F02M 37/00

(54) Anordnung zur Gasabscheidung.

(30) Priorität: **03.04.85 DE 3512191**

(43) Veröffentlichungstag der Anmeldung:
**07.10.87 Patentblatt 87/41**

(45) Bekanntmachung des Hinweises auf die Patenterteilung:
**24.10.90 Patentblatt 90/43**

(84) Benannte Vertragsstaaten:
**DE FR GB IT SE**

(56) Entgegenhaltungen:
**DE-A- 2 932 014**
**FR-A- 2 203 955**
**US-A- 2 043 074**
**US-A- 2 340 220**

(73) Patentinhaber: **Mannesmann Kienzle GmbH,
Postfach 1640 Heinrich-Hertz-Strasse,
D-7730 Villingen-Schwenningen(DE)**

(72) Erfinder: **Kelch, Heinz, Holzwiese 28,
D-7744 Königsfeld 5(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anordnung zur Gasabscheidung in einem mit einer Öffnung für den Gasaustausch versehenen Tank, welcher einen Schwimmer und ein von diesem gesteuertes, dem Sockel des Tanks zugeordnetes Ventil beinhaltet und welcher in einem für Kraftstoffverbrauchsmessung ausgerüsteten Betriebssystem eines Dieselmotors der Aufnahme der von der Einspritzpumpe über eine weitere Öffnung in den Tank rückfließenden Kraftstoffüberschußmenge dient.

Bei einem Betriebssystem eines Dieselmotors wird bekanntlich mehr Kraftstoff von der Kraftstofförderpumpe in Umlauf gesetzt als von der Einspritzpumpe "verbraucht" werden kann. Die relativ große, im allgemeinen zum Kraftstoffvorratstank rückfließende Kraftstoffüberschußmenge dient der Kühlung und hat gleichzeitig eine Spülfunktion hinsichtlich Gasblasenansammlungen in der Einspritzpumpe.

Soll in einem solchen Betriebssystem der Kraftstoffverbrauch gemessen werden, so kann dies entweder durch Differenzmessung erfolgen, indem vor und nach der Einspritzpumpe ein Mengenmeßgerät in den Kreislauf eingeschaltet wird, oder dadurch, daß durch Rückführen der Kraftstoffüberschußmenge in die Saugleitung zwischen Kraftstofförderpumpe und Kraftstoffvorratstank ein als Einspritzkreislauf bezeichneter Kraftstoffkreislauf gebildet und lediglich ein Mengenmeßgerät in der Saugleitung zwischen der Einspeisestelle der Kraftstoffüberschußmenge und dem Kraftstoffvorratstank vorgesehen wird.

Bei beiden Meßmethoden führt es zu Verfälschungen der Meßergebnisse, wenn die rückfließende Kraftstoffüberschußmenge, was abhängig vom Einspritzverfahren beispielsweise bei Cummins-Motoren oder bei Verwendung von Verteilereinspritzpumpen und Membranförderpumpen besonders stark ausgeprägt ist, einen hohen Gasanteil enthält. Da eine Entgasung des rückfließenden Kraftstoffs in einem solchen für Kraftstoffverbrauchsmessung vorgesehenen Betriebssystem eines Dieselmotors nicht mehr im Kraftstoffvorratstank erfolgen kann, ist es demnach unerläßlich, einen zusätzlichen Tank für die Gasabscheidung vorzusehen. Dabei bietet es sich für den Fall der Einspeisung der Kraftstoffüberschußmenge in die Saugleitung an, in diesem Tank, vorzugsweise in dessen Sockel, ein beispielsweise Tankraum und Saugleitung verbindendes Ventil anzuordnen und das Ventil und somit die Einspeisung der Kraftstoffüberschußmenge in den Einspritzkreislauf bzw. das Nachsaugen von Kraftstoff aus dem Kraftstoffvorratstank mit einem in dem Tank angebrachten Schwimmer zu steuern.

Es ist verständlich, daß für diese für die Kraftstoffverbrauchsmessung erforderliche Hilfseinrichtung gefordert werden muß, den Aufwand so gering wie möglich zu halten und wegen der zu erwartenden Einbauprobleme vor allem auch das Bauvolumen des zusätzlichen Tanks soweit als möglich zu reduzieren. Dem steht, insbesondere wegen der unmittelbaren Zuordnung von Saugleitung und gasabscheidendem Tank, die Forderung gegenüber, daß die Gasabscheidung mit einem relativ hohen Wirkungsgrad erfolgen muß, wobei erschwerend hinzukommt, daß die rückfließende Kraftstoffüberschußmenge einen Gasanteil von bis zu 15 % enthält und zum Teil in schaumiger Phase auftritt. Außerdem erfolgt unter den gegebenen Betriebsverhältnissen der Rückfluß vielfach schwallartig, so daß eine Beruhigung und eine zügige Entgasung des in den Tank eingeströmten Kraftstoffs verzögert werden.

Mit der DE-C 2 932 014 ist ein Tank zur Gasabscheidung bekannt geworden, dessen Innenraum durch eine teils konische, teils zylindrische Hülse in einen äußeren Raum, in den der Rückfluß erfolgt, und in einen inneren Raum, in dem sich der Schwimmer und das diesem zugeordnete Ventil befinden, geteilt ist. Diese Hülse besteht aus einem Gewebe mit der Aufgabe, Gasblasen auszufiltern. Die Praxis zeigt jedoch, daß der einströmende Kraftstoff sich bei dieser Lösung nicht in der erforderlichen Weise großflächig verteilt und daß im Kraftstoff sehr fein verteiltes bzw. gelöstes Gas durch das Gewebe "durchschlägt" und sich somit bereits im Schwimmerraum und in der Nähe des Ventils befindet. Da es in der Praxis außerdem erforderlich ist, die Gewebehülse in geeigneter Weise zu stützen, wozu ein siebartig ausgebildetes Blech gewählt wird, entstehen beim Einströmen des Kraftstoffs an den Lochkanten zusätzlich Turbulenzen, die zur Blasenbildung führen. Gleiches gilt infolge des beim Betrieb des betreffenden Kraftfahrzeuges erheblich schwankenden Tankpegels, so daß für eine in diesem Falle nur bedingt zufriedenstellende Gasabscheidung von vornherein ein relativ hoher Tank gewählt werden muß.

Der vorliegenden Erfindung war daher die Aufgabe gestellt, eine den im Kraftstoffkreislauf eines Dieselmotors gegebenen rauhen Betriebsbedingungen angepaßte Anordnung zur Gasabscheidung zu schaffen, welche mit einem geringen Fertigungs- und Montageaufwand herstellbar ist und welche es bei zuverlässiger Funktion gestattet, einen relativ kleinen Tank vorzusehen.

Die Lösung dieser Aufgabe zeichnet sich dadurch aus, daß in dem Tank im wesentlichen konzentrisch zur Tankachse wenigstens zwei Hülsen angeordnet sind, von denen die innenliegende Hülse weitgehend flüssigkeitsdicht mit dem Sockel des Tanks verbunden ist, daß dem durch die außenliegende Hülse und die Außenwand des Tanks gebildeten Raum die Öffnung für die in den Tank rückfließende Kraftstoffüberschußmenge zugeordnet ist und daß der durch die außenliegende Hülse und die Außenwand des Tanks gebildete Raum am Sockel des Tanks und der von der innenliegenden Hülse umschlossene, dem Schwimmer zugeordnete Raum in einem höheren Niveau mit dem zwischen den beiden Hülsen bestehenden Raum in Fluidverbindung stehen.

Ein bevorzugtes Ausführungsbeispiel ist dadurch gekennzeichnet, daß die außenliegende Hülse und die Prallkuppel als ein Teil ausgebildet sind und die innenliegende Hülse mit der außenliegenden Hülse steckbar verbindbar ist und daß wenigstens eine in axialer Richtung wirkende, zwischen dem Deckel des Tanks und der Prallkuppel angeordnete Druckfeder vorgesehen ist.

Bei der erfindungsgemäßen Lösung wird eine optimale Entgasung und, was für die Entgasung Voraussetzung ist, Beruhigung des rückfließenden Kraftstoffs, insbesondere durch eine möglichst großflächige Verteilung, mit anderen Worten durch eine großflächige Bindung an Wände erzielt. Außerdem bewirkt die erfindungsgemäße Anordnung durch die kaskadenartige Umlenkung der Strömung einen relativ langen Strömungsweg, aber auch ein weitgehendes "Ausdünnen" des Kraftstoffflusses.

Im folgenden seien verschiedene Ausführungsbeispiele anhand der beigefügten Zeichnungen näher erläutert. Es zeigen

FIG. 1 eine schematische Darstellung eines Einspritzkreislaufs eines Dieselmotor-Betriebssystems mit einem in die Saugleitung eingeschalteten Mengenmeßgerät,

FIG. 2 eine Draufsicht auf einen als Gasabscheider dienenden Tank,

FIG. 3 einen Längsschnitt des Tanks gemäß der Schnittlinie A-B in FIG. 2,

FIG. 4 einen Teilschnitt enes Ausführungsbeispiels der erfindungsgemäßen Anordnung mt spritzgußtechnisch hergestellten Hülsen,

FIG. 5 enen Teilschnitt eines weiteren Ausführungsbeispiels der erfindungsgemäßen Anordnung mit metallischen Hülsen.

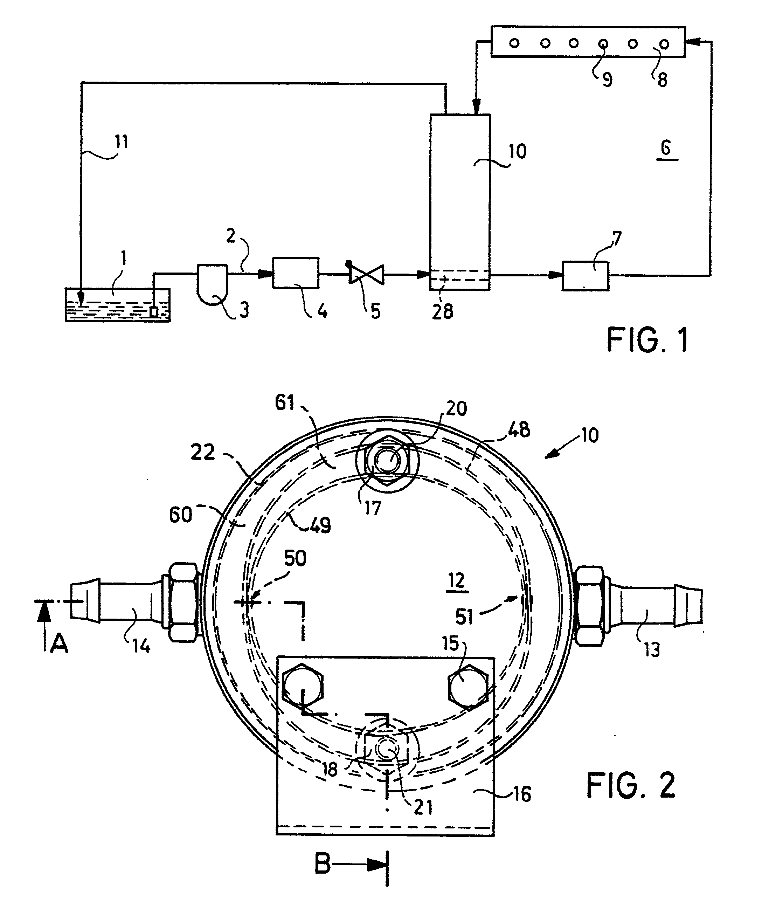

Die schematische Darstellung FIG. 1 zeigt ein Dieselmotor-Betriebssystem mit einem Kraftstoffvorratstank 1, einer aus dem Kraftstoffvorratstank 1 herausführenden Saugleitung 2, in der ein Filter 3, ein Mengenmeßgerät 4 und ein Rückschlagventil 5 eingeschaltet sind, sowie mit enem Einspritzkreislauf 6, in welchem, ausgehend von einer Kraftstofförderpumpe 7, über eine Einspritzpumpe 8 - die Einspritzdüsen sind mit 9 bezeichnet - und einen der Gasabscheidung dienenden Tank 10 eine bestimmte, gegenüber der "verbrauchten" Einspritzmenge im allgemeinen relativ große Kraftstoffüberschußmenge in Umlauf gehalten wird. Mit 11 ist eine Kraftstoffvorratstank 1 und Gasabscheidetank 10 verbindende Gasleitung bezeichnet.

Die Draufsicht FIG. 2 zeigt einen Deckel 12 des im wesentlichen zylindrischen Tanks 10, an welchem Schlauchanschlußmittel 13 und 14 für einerseits das Anbinden des von der Einspritzpumpe 8 ausgehenden, nicht näher bezeichneten Rückflußzweiges des Einspritzkreislaufs 6, andererseits die Gasleitung 11 befestigt sind. Dem Tank 10 ist ferner ein mittels Schrauben, von denen eine mit 15 bezeichnet ist, angebrachter Bügel 16 zugeordnet, mittels dessen der Tank 10 an einer geeigneten Stelle im Motorraum eines Fahrzeuges befestigt werden kann. Im Deckel 12 versenkt angeordnete Muttern 17 und 18 dienen dem Befestigen des Deckels 12 auf in einem Sockel 19 (FIG: 3) des Tanks 10 befestigten Stützen 20 und 21.

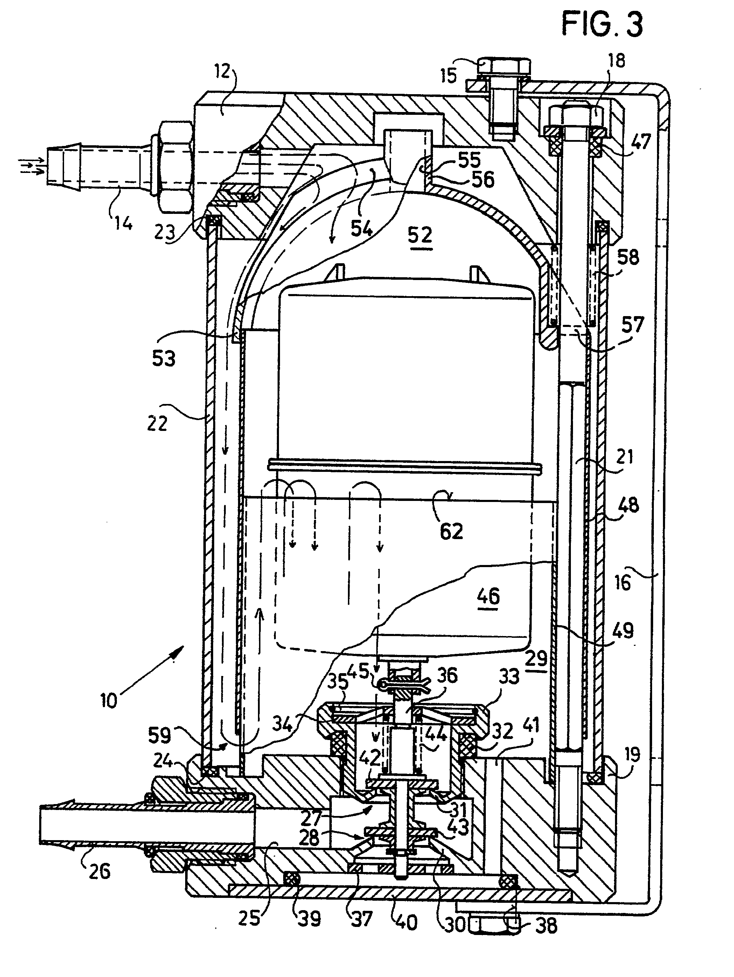

Der in FIG. 3 dargestellte Schnitt A-B zeigt, daß der Tank 10 außer dem Deckel 12 und dem Sockel 19 aus einer Hülse (Außenwand) 22 besteht, die zwischen Deckel 12 und Sockel 19 unter Zwischenlage von Dichtungen 23 und 24 gehaltert ist. Im Sockel 19 ist ein quer zur Hochachse des Tanks 10 liegender Kanal 25 ausgebildet, welcher über Schlauchanschlüsse, von denen einer dargestellt und mit 26 bezeichnet ist, zwischen Saugleitung 2 und Einspritzkreislauf 6 einschaltbar ist. Der Kanal 25 weist in Richtung der Hochachse des Tanks 10 zwei Öffnungen 27 und 28 auf, die ihn fluidisch mit dem Innenraum 29 des Tanks 10 verbinden. An der einen Öffnung 28 ist ein erster Ventilsitz 30 ausgebildet, während en zweiter Ventilsitz 31 einer in den Sockel 19 unter Zwischenlage einer Dichtung 32 einsetzbaren Hohlschraube 33 zugeordnet ist. Der Vollständigkeit halber sei erwähnt, daß die mit einem nicht näher bezeichneten Rändelbund versehene Hohlschraube 33 der Aufnahme einer mit ebenfalls nicht bezeichneten Öffnungen versehenen Lagerplatte 34, die mittels eines Federringes 35 in der Hohlschraube 33 gehalten wird und in der die eine Lagerstelle einer Ventilstange 36 ausgebildet ist, dient. Die zweite Lagerstelle der Ventilstange 36 ist in einer ebenfalls von Öffnungen durchbrochenen Lagerplatte 37 vorgesehen, die in einer der Öffnung 28 bzw. dem an der Öffnung 28 ausgebildeten Ventilsitz 30 rückseitig zugeordneten Freisparung 38 eingesetzt ist. Die Freisparung 38 bildet zusammen mit einer am Sockel 19 flüssigkeitsdicht (Dichtung 39) befestigten Abdeckung 40 eine Kammer, die über mehrere Kanäle, von denen einer - 41 - in FIG. 3 gezeichnet ist, mit dem Innenraum 29 in Verbindung steht. Ferner zeigt FIG. 3, daß auf der Ventilstange 36 zwei scheibenförmige Dichtkörper 42 und 43 angeordnet sind, daß die Ventilstange 36 unter der Wirkung einer in der Hohlschraube 33 angeordneten Druckfeder 44 steht und daß sie über einen Splint 45 gelenkig mit einem bei dem gewählten Ausführungsbeispiel gemäß FIG. 3 den Innenraum 29 des Tanks 10 weitgehend ausfüllenden Schwimmer 46 verbunden ist. Mit 47 ist eine von zwei Dichtungen bezeichnet, die den Stützen 20 und 21 zugeordnet sind. Die relativ weich dimensionierte Druckfeder 44 dient im wesentlichen dazu, das im Anwendungsfall Kraftfahrzeug starken Erschütterungen ausgesetzte, schwimmergesteuerte Doppelventil, das in der beschriebenen Ausführung der druckfreien Einspeisung der Kraftstoffüberschußmenge in den Kanal 25 und somit die Saugleitung 2 dient, mit einer gewissen Grundlast zu versehen.

Die eigentliche Anordnung zur Gasabscheidung wird gebildet von zwei relativ dünnwandigen und verformbaren Hülsen 48 und 49, die, wie FIG. 2 zeigt, an gegenüberliegenden Mantellinien miteinander verbunden sind (50, 51), so daß bei deren Montage nur eine, in diesem Falle doppelwandige Hülse zu handhaben ist. Den Hülsen 48 und 49, die von den beiden zwischen Sockel 19 und Deckel 12 durchgehenden Stützen 20 und 21 in ihrer Lage fixiert sind, indem die Stützen 20 und 21 zwischen den Hülsen 48 und 49 hindurchgreifen, ist eine Prallkuppel 52 zugeordnet, die mit einem übergreifenden Rand 53 oder lediglich einzelnen übergreifenden Fingern der Zentrierung bzw. der Halterung der außen liegenden Hülse 48 dient. An der Prallkuppel 52 sind ferner ein der Einströmöffnung zugeordneter Kiel 54, ein mit einer dem Innenraum 29 des Tanks 10 zugeordneten Öffnung 55 versehener Stutzen 56 und zwei Konsolen - eine ist in FIG. 3 mit 57 bezeichnet - ausgebildet. Von den Stützen 20 und 21 geführte Druckfedern 58, die sich zwischen Deckel 12 und Konsolen 57 der Prallkuppel 52 abstützen, bewirken, daß die gegenüber der außen liegenden Hülse 48 axial versetzte Hülse 49 auf dem Sockel 19 stirnseitig aufliegt, was eine ausreichend flüssigkeitsdichte Verbindung mit dem Sockel 19 des Tanks 10 darstellt. Der axiale Versatz der beiden Hülsen 48 und 49 ergibt im Bereich des Sockels 19 eine Freiverbindung 59 zwischen dem zwischen der Außenwand 22 des Tanks 10 und der außen liegenden Hülse 48 gebildeten Außenraum 60 und dem zwischen den beiden Hülsen 48 und 49 abgegrenzten Raum bzw. wie FIG. 2 zeigt, den beiden Räumen sichelförmigen Querschnitts, von denen einer mit 61 bezeichnet ist.

Der von der Einspritzpumpe 8 rückfließende Kraftstoff, der beispielsweise über den Schlauchanschluß 14 in den Tank 10 einströmt (gestrichelte Pfeile), tritt zunächst auf der Prallkuppel 52 auf. Dabei vermeidet der Kiel 54 ein Spritzen und somit e  zusätzliches Gasaufnehmen und bewirkt ferner ei. . weitgehende Verteilung des Kraftstoffs über die Prallkuppel 52. Vorteilhafterweise wird für die Prallkuppel 52 ein Werkstoff gewählt, der gegenüber Dieselkraftstoff eine möglichst hohe Adhäsion besitzt. Der von der Prallkuppel 52 abströmende Kraftstoff fließt zunächst an der außenliegenden Hülse 48 abwärts, umströmt diese (Fluidverbindung 59), steigt im Zwischenraum 61 wieder auf, überströmt die Kante 62 der innenliegenden Hülse 49 und strömt dann erst in den dem Schwimmer 46 zugeordneten Innenraum 29 des Tanks 10 ein.

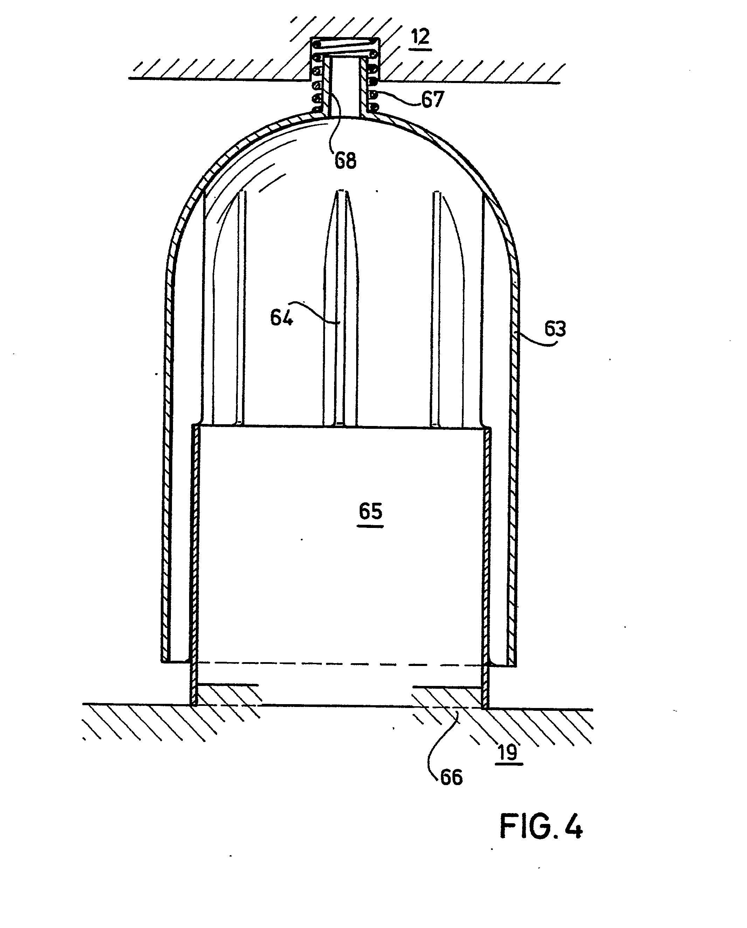

Bei dem in FIG. 4 dargestellten Ausführungsbeispiel sind Prallkuppel und außenliegende Hülse als ein Teil 63 vorzugsweise spritzgußtechnisch ausgebildet. Rippen, von denen eine mit 64 bezeichnet ist, dienen der Versteifung und der Zentrierung der mit einem Schiebesitz dem Teil 63 zugeordneten und unter Umständen ebenfalls mit Rippen versteiften, innenliegenden Hülse 65. Ferner zeigt die Lösung gemäß FIG. 4, daß die innenliegende Hülse 65 an einem am Sockel 19 angeformten Ansatz 66 gehaltert ist und daß lediglich eine Druckfeder 67 unmittelbar dem an dem Teil 63 ausgebildeten, mit der Gasaustauschöffnung versehenen Stutzen 68 zugeordnet ist.

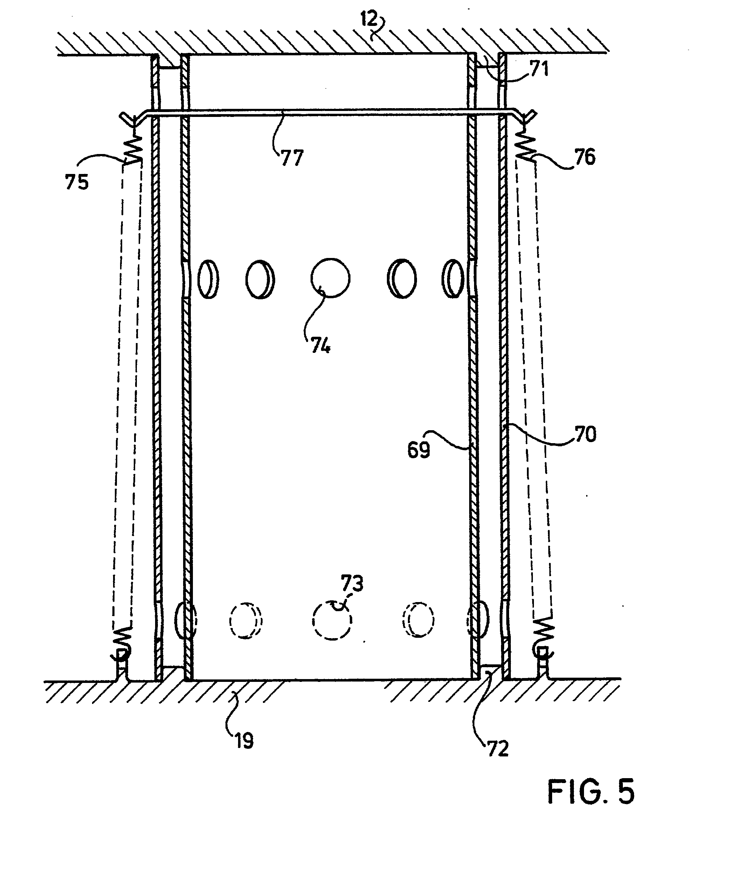

Das Ausführungsbeispiel gemäß FIG. 5 zeigt die Verwendung von zwei zwischen Deckel 12 und Sockel 19 gehalterten, metallischen Hülsen 69 und 70. Jeweils am Deckel 12 und Sockel 19 ausgebildete Rippen 71 und 72 dienen der Zentrierung der Hülsen 69 und 70. Eine an der außenliegenden Hülse 70 vorgesehene Lochreihe 73 in Sockelnähe und eine an der innenliegenden Hülse 69 in einem höheren Niveau ausgebildete Lochreihe 74 dienen der Strömungslenkung des Kraftstoffs, während zwei Zugfedern 75 und 76 im Zusammenwirken mit einem Steg 77, welcher durch geeignete, in den beiden Hülsen 69 und 70 vorgesehene, nicht näher bezeichnete Öffnungen, die gleichzeitig als Gasabzug dienen, durchgreift, als Montagehilfe dienen.

## Patentansprüche

1. Anordnung zur Gasabscheidung in einem mit einer Öffnung für den Gasaustausch versehenen Tank, welcher einen Schwimmer und ein von diesem gesteuertes, dem Sockel des Tanks zugeordnetes Ventil beinhaltet und welcher in einem für Kraftstoffverbrauchsmessung ausgerüsteten Betriebssystem eines Dieselmotors der Aufnahme der von einer Einspritzpumpe über eine weitere Öffnung in den Tank rückfließenden Kraftstoffüberschußmenge dient, dadurch gekennzeichnet, daß in dem Tank im wesentlichen konzentrisch zur Tankachse wenigstens zwei Hülsen angeordnet sind, von denen die innenliegende Hülse (49; 65) weitgehend flüssigkeitsdicht mit einem Sockel (19) des Tanks (10) verbunden ist, daß dem durch die außenliegende Hülse (48; 63) und die Außenwand (22) des Tanks (10) gebildeten Raum (60) die Öffnung für die in den Tank (10) rückfließende Kraftstoffüberschußmenge zugeordnet ist und daß der durch die außenliegende Hülse (48; 63) und die Außenwand (22) des Tanks (10) gebildete Raum (60) am Sockel (19) des Tanks (10) und der von der innenliegenden Hülse (49; 65) umschlossene, dem Schwimmer (46) zugeordnete Raum (29) in einem höheren Niveau mit dem zwischen den beiden Hülsen bestehenden Raum (61) in Fluidverbindung stehen.

2. Anordnung nach Anspruch 1, dadurch gekennzeichnet, daß auf der außenliegenden Hülse (48) eine der Kraftstoffrückflußöffnung zugeordnete Prallkuppel (52) gehaltert ist.

3. Anordnung nach Anspruch 1, dadurch gekennzeichnet, daß die beiden Hülsen (48, 49) starr miteinander verbunden sind.

4. Anordnung nach Anspruch 2, dadurch gekennzeichnet, daß die außenliegende Hülse und die Prallkuppel als ein Teil (63) ausgebildet sind und die innenliegende Hülse (65) mit der außenliegenden Hülse (Teil 63) steckbar verbindbar ist.

5. Anordnung nach Anspruch 2, dadurch gekennzeichnet, daß wenigstens eine in axialer Richtung wirkende zwischen dem Deckel (12) des Tanks (10) und der Prallkuppel (52) angeordnete Druckfeder (58 bzw. 67) vorgesehen ist.

## Claims

1. Arrangement for gas separation in a tank, which is provided with an opening for gas exchange, which contains a float and a valve controlled thereby and associated with the base of the tank, and which, in an operating system of a diesel engine equipped for measurement of fuel consumption, serves for the taking up of an excess quantity of fuel flowing back from an injection pump through a further opening into the tank, characterized in that there are arranged in the tank substantially concentrically with respect to the axis of the tank at least two sheaths, whereof the inner sheath (49; 65) is connected in a largely liquid-tight manner to a base (19) of the tank (10), in that the opening for the excess quantity of fuel flowing back into the tank (10) is associated with the space (60) formed by the external sheath (48; 63) and the outer wall (22) of the tank (10), and in that the space (60) formed by the external sheath (48; 63) and the outer wall (22) of the tank (10) is in fluid connection with the space (61) between the two sheaths at the base (19) of the tank (10) and the space (29) surrounded by the inner sheath (49; 65) and associated with the float (46) is in fluid connection with the space (61) between the two sheaths at a higher level.

2. Arrangement according to claim 1, characterized in that an impact dome (52) associated with the fuel return flow opening is mounted on the external sheath (48).

3. Arrangement according to claim 1, characterized in that the two sheaths (48, 49) are rigidly connected to one another.

4. Arrangement according to claim 2, characterized in that the external sheath and the impact dome are constructed as one part (63) and the inner sheath (65) is connectable by being insertable with the external sheath (part 63).

5. Arrangement according to claim 2, characterized in that at least one pressure spring (58 or 67) acting in the axial direction and arranged between the lid (12) of the tank (10) and the impact dome (52) is provided.

## Revendications

1. Séparateur de gaz dans un réservoir pourvu d'un orifice pour l'échange gazeux, qui contient un flotteur et une soupape commandée par ce dernier et associée au socle du réservoir et qui sert, dans un système d'exploitation d'un moteur Diesel équipé pour la mesure de consommation de carburant, à la réception de la quantité excédentaire de carburant refluant par un autre orifice dans ledit réservoir, caractérisé par le fait que le réservoir contient au moins deux douilles disposées, pour l'essentiel, concentriquement par rapport à l'axe de réservoir, dont la douille située à l'intérieur (49; 65) est reliée, d'une manière largement étanche aux liquides, à un socle du réservoir (10), qu'à l'espace (60) formé par la douille (48; 63) située à l'extérieur et la paroi externe (22) du réservoir (10) est associé l'orifice pour la quantité de carburant excédentaire refluant dans le réservoir (10) et que l'espace (60) formé par la douille (48; 63) située à l'extérieur et la paroi externe (22) du réservoir (10) communique par le fluide, au socle (19) du réservoir (10), et l'espace (29) entouré par la douille (49; 65) située à l'intérieur, assoicé au flotteur (46), à un niveau supérieur, avec l'espace (61) existant entre les deux douilles.

2. Dispositif selon la revendication 1, caractérisé par le fait que sur la douille (48) située à l'extérieur est fixée une couple (52) associée à l'orifice de reflux du carburant.

3. Dispositif selon la revendication 1, caractérisé par le fait que les deux douilles (48, 49) sont rigidement reliées ensemble.

4. Dispositif selon la revendication 2, caractérisé par le fait que la douille située à l'extérieur et la coupole sont réalisées en une seule pièce (63) et que la douille (65) située à l'intérieur peut être enfichée avec la douille (élément 63) située à l'extérieur.

5. Dispositif selon la revendication 2, caractérisé par le fait qu'il est prévu au moins un ressort de pression (58 ou 67) agissant dans le sens axial qui est disposé entre le couvercle (12) du réservoir (10) et la coupole (52).

FIG. 1

FIG. 2

FIG. 3

FIG. 4

EP 0 239 788 B1

FIG. 5